# EUROPEAN PATENT APPLICATION

(11) **EP 1 731 760 A1**
(43) Date of publication of application: **13.12.2006**
(21) Application number: 05727352.6
(22) Date of filing: 30.03.2005
(51) Int. Cl.: F03D 11/04, F03D 3/06, F03D 9/00, F03D 11/02, H02K 7/18

(54) **CANTILEVERED VERTICAL SHAFT TYPE WINDMILL**

(30) Priority: 31.03.2004 JP 2004105919
(71) Applicant: Intellectual Property Bank Corp., Tokyo 105-0001 (JP)
(72) Inventor: YOKOI, Tadashi, 2610011 (JP)
(74) Representative: Rees, Alexander Ellison
(86) International application number: PCT/JP2005/006097
(87) International publication number: WO 2005/095794

(57) **Abstract**

The invention seeks to provide a cantilever type vertical axis wind turbine capable of reducing repeated load caused on a rotary shaft and having advanced vibration stability and low-noise property.

It comprises an outer race side rotor 17 of the vertical axis wind turbine 10 producing a rotational torque with wind, a cantilevered inner race side stationary column 10 for supporting the outer race side rotor 17 of the vertical axis wind turbine 10 through bearings 30a, 30b and 30c for supporting a force in a radial direction, and the bearings 30a, 30b and 30c arranged at positions astride the wind pressure center position on which the wind pressure acts on the outer race side rotor 17 of the vertical axis wind turbine 10 for supporting the outer race side rotor 17 and the inner race side stationary column 14.

## Description

### TECHNICAL FIELD

This invention relates to a rotational support mechanism and a transmission mechanism for transmitting a rotational torque in a vertical axis wind turbine.

### BACKGROUND ART

As a vertical axis wind turbine having a drag type blade, there are a Darius wind turbine having curved blades and a straight-blade Darius wind turbine, namely, a straight-blade type vertical axis wind turbine. These vertical axis wind turbines are operated by the lifting principle showing an outstanding output performance similarly to a propeller-type horizontal axis wind turbine in principle, and have advantages of capable of working without regard to a wind direction and being reduced in size for being suitable for usage in urban areas. Of the vertical axis wind turbines having a rotor support mechanism, there has been a cantilever type vertical axis wind turbine as a straight blade type wind turbine having a cantilevered structure available in installing the wind turbine in which a stationary column for supporting a wind turbine rotor has one free end and the other fixed end. Of large-scaled Darius wind turbines with curved blades, there have been lots of wind turbines supported in its vertical state by a fixed shaft disposed on the inner central portion within a rotary shaft on the uppermost part of the wind turbine and cables connecting the fixed shaft to the ground in four directions to secure the fixed shaft, i.e., in such a stage that wind turbines (of a dual-support type) are fixedly supported at both the upper and lower ends. There has been another wind turbine of a type of a small Darius wind turbine with curved blades, which has a cantilevered stationary column for the wind turbine rotor.
The present invention seeks to provide specifically a rotational support mechanism for the rotor in a cantilever type vertical axis wind turbine and a torque transmission mechanism associated therewith as a better solution to the conventional problems in the art.

There has conventionally been known a Sabonius wind turbine of a vertical axial rotation type, which is featured by a blade comprising support frames, which extend along the upper and lower rotation planes of the wind turbine and pass through the rotation axis of the wind turbine along the wind receiving surface of the wind turbine, Sabonius blades, blades using lifting power, which are supported by the support frames at distant positions from the Sabonius blades, and an electric generator on the rotation axis. (e.g. Patent Literature 1)

Also, there has been known a small wind power generator comprising a straight-blade turbine mounted on a rotary shaft connected to an electric generator, a starting turbine rotatably mounted on the rotary shaft so as to produce a driving torque even by weak wind, and a connection means intervening between the starting turbine and the straight-blade turbine for transmitting the revolution of the starting turbine to the straight-blade turbine in one direction, wherein the driving torque of the starting turbine at a low-speed revolution is transmitted to the straight-blade turbine through the connection means, and the straight-blade turbine is disconnected from the straight-blade turbine when the revolution rate of the straight-blade turbine exceeds that of the starting turbine. (e.g. Patent Literature 2)

There has been so far known a large-sized Darius wind turbine which is held by pulling the top of the wind turbine in four directions with cables having cable ends secured at distant points from the wind turbine so as not to fall down. (e.g. Non-patent Literature 1)
[Patent Literature 1] Japanese Pat Appln. Pub. HEI 11-294313 (Pages 1-2 and FIG 1)
[Patent Literature 2] Japanese Pat Appln. Pub. HEI 11-201020 (Pages 1-3 and FIG 2)
[Non-patent Literature 1] "Wind turbine technology", David A. Spera, FIGS. 2-7, ASME Press 1994

### DISCLOSURE OF THE INVENTION

### PROBLEMS TO BE SOLVED BY THE INVENTION

The hybrid power generation method disclosed in Patent Literature 1 comprises two support frames, which extend along the upper and lower rotation planes of the wind turbine and pass through the rotation axis of the wind turbine along the wind receiving surface of the wind turbine around the relatively low Sabonius blades, and lift-based propeller type blades disposed parallel to the rotary shaft at the end portions of the two support frames so as to have curved surfaces facing outward with respect of the turning circle and flat surfaces facing inward.

The support frames 2 are attached to the rotary shaft 4 as illustrated in FIG 2 of Patent Literature 1. On the upper portion of a support pedestal 6, a power generator and a bearing device 4 are mounted for rotatably supporting the rotary shaft 4. Since the rotary shaft of the wind turbine is on the inner race side of the bearing, the power point at which the wind turbine receives wind is distant from the supporting point at which the bearing device is placed, consequently to cause disadvantages such that the rotary shaft of the wind turbine is largely bent due to the wind hitting the wind turbine and difference in lifting power brought about on the blades and the rotating wind turbine oscillates unstably.

The direction in which the rotary shaft is bent changes with the revolution of the wind turbine, and in the first-order mode, at least one vibration is caused repeatedly per one revolution. The lift-type wind turbine rotor rotates at a tip speed about two to ten times the wind speed. The frequency of vibration, whereas it varies with the size of the wind turbine or vibration mode, should be in the range of 0 to 20 Hz even when taking notice of the first-order mode only, thus to possibly cause the wind turbine to vibrate in resonance with the characteristic frequency of a structure. The resonance in the wind turbine may not only cause abnormal vibrations or noises but also destroy the wind turbine structure itself, rotary shaft or bearing due to repeated loading, consequently to exert a bad influence upon the durability of the wind turbine.

If the rotary shaft is bent due to the force of wind or instability of the rotor during high-speed revolution of the rotor, the centrifugal force proportional to the square of the radius (degree of eccentricity) by which the rotary shaft is bent and the angular rate acts on the rotor, thus disadvantageously increasing bending of the rotor to further increase imbalance.

The small wind power generator described in Patent Literature 2 is a simplified power generator capable of being installed on the roof of a private residence, the rooftop of a condominium building or the like. As illustrated in FIG 1 of Patent Literature 2, the small wind power generator has a coaxial double rotary shafts 3A and 3B disposed upright on a roof mount pedestal 10 fixed on the roof through a bearing 10a and supported on a stay 4 through a stay bearing 4a.

Similarly in the wind turbine described in Patent Literature 2, the inner race of the bearing serves as the rotary shaft and the power point at which the wind turbine receives wind is distant from the supporting point at which the bearing device is placed, consequently to cause disadvantages such that the rotary shaft of the wind turbine is largely bent due to the wind hitting the wind turbine and difference in lifting power brought about on the blades and the rotating wind turbine oscillates unstably.

In a case where it is wanted to prevent the shaky revolution of the rotary shaft in the small wind power generator described in Patent Literature 2, the rotary shaft should be designed to be made remarkably thick. Besides, necessity of separating two bearings on the under side distant from each other entails a structural disadvantage such as increases in weight of the shaft and in space in the longitudinal direction of the shaft.

Furthermore, in the small wind power generator disclosed in Patent Literature 2, a power generator and a specifically designed power transmission mechanism must be disposed on the roof base under the rotary shaft, thus suffering shortcomings in maintenance and reliability of the power transmission mechanism and having problems with noises from gears and voluminous setting space.

The conventional vertical axis wind turbine of an axial rotation type in which the shaft on the inner race side rotates needs to elongate the shaft length at the bearing portion under a support arm and further requires a sufficient setting space of the power generator. Thus, the vertical axis wind turbine is high in height and increases in bending moment in whole. These become a liability in the wind turbine. Consequently, since the overall height of the wind turbine is significantly increased in height even in the case of additionally mounting the wind turbine onto an existing post, it is difficult to additionally mount the wind turbine onto the top of the post. Hence, the whole system including the wind turbine had been arranged in the state held by the side of the post. This mounding method tends to be unspectacular in the light of environmental appearance.

As described above, taking into consideration the life of the small wind power generator with the problem of the secular change of the wind turbine, the conventional structure has suffered a disadvantage such that improvement is fundamentally difficult

Meanwhile, since the Darius wind turbine disclosed in Non-patent Literature 1 is required to be held by pulling the top of the wind turbine with cables having cable ends secured at distant points from the wind turbine, it suffers disadvantages such that it needs a large space therefor and adversely affects the landscape on site.

In consideration of the aforementioned conventional circumstances, the present invention seeks to provide a small cantilever type vertical axis wind turbine capable of reducing repeated load caused on the rotary shaft. Further, the present invention seeks to provide a small cantilever type vertical axis wind turbine having advanced vibration stability to enable a stable operation and less difficulty of likely generating significant noise pollution.

### MEANS OF SOLVING THE PROBLEMS

In order to solve the problems described above according to the present invention, there is provided a cantilever type vertical axis wind turbine featured by comprising an outer race side rotor having a plurality of blades for producing a rotational torque with wind, an inner race side stationary column having one free end externally unconstrained and the other stationary end, and a plurality of bearings mounted between the outer race side rotor and the inner race side stationary column for supporting the outer race side rotor on the inner race side stationary column.

Further, the cantilever type vertical axis wind turbine according to the present invention is featured by comprising an outer race side rotor having a plurality of blades for producing a rotational torque with wind, an inner race side stationary column having one free end externally unconstrained and the other stationary end, and a plurality of bearings mounted between the outer race side rotor and the inner race side stationary column for supporting the outer race side rotor on the inner race side stationary column, wherein the aforementioned bearings include at least one bearing disposed on the upper side above the wind pressure center position, on which the wind acts on the outer race side rotor, and at least one bearing disposed on the lower side under the wind pressure center position.

In the present invention comprising the outer race side rotor for producing a rotational torque with wind, the inner race side stationary column having one free end externally unconstrained and the other stationary end, and the plurality of bearings mounted between the outer race side rotor and the inner race side stationary column for supporting the outer race side rotor on the inner race side stationary column, there are disposed at least one bearing on the upper side above the wind pressure center position, on which the wind in the horizontal direction acts on the outer race side rotor, and at least one bearing on the lower side under the wind pressure center position by way of example, thus to enable provision of the cantilever type vertical axis wind turbine having a low overall height, so that a wind power generator having excellent vibration stability and durability can be installed near the living area of people by diminishing emergence of problems related to the vibrations brought about by the whole rotating mechanism.

Further, since the load acting on the stationary shaft is nearly in one direction by placing the stationary shaft (stationary column) on the inner race side of the bearing, a small wind power generator having less vibration and high stability can be provided.

Further, since the power generator can be disposed on the opening end side of the inner race side stationary column of a cantilever type, it can eliminate the need for a pinion and a multiplying gear, which readily cause a mechanical problem on the side of the rotary shaft under the wind turbine and the need of longly elongating the rotary shaft downward, thus to enable adoption of unconfined design.

Further, by using a magnetic coupling as a coupling for transmitting the rotational torque of the outer race side rotor to the power generator, displacement between the centers of the rotary shaft of the outer race side rotor and the inner race side stationary column can be magnanimously allowed to significantly reduce impact and vibrations associated with the revolution.

Further, in order to solve the problems described above according to the present invention, there is provided a cantilever type vertical axis wind turbine featured by comprising an outer race side rotor having a plurality of blades for producing a rotational torque with wind, an inner race side stationary column having one free end externally unconstrained and the other stationary end, a plurality of bearings mounted between the outer race side rotor and the inner race side stationary column for supporting the outer race side rotor on the inner race side stationary column, and a torque transmission shaft of a cylindrical column or hollow cylindrical shape having a function of an output shaft terminal of the wind turbine, which is connected to the outer race side rotor and passes through the inside of the inner race side stationary column in the direction from the free end to the stationary end.

Further, the cantilever type vertical axis wind turbine according to the present invention is featured by comprising an outer race side rotor having a plurality of blades for producing a rotational torque with wind, an inner race side stationary column having one free end externally unconstrained and the other stationary end, a plurality of bearings mounted between the outer race side rotor and the inner race side stationary column for supporting the outer race side rotor on the inner race side stationary column, and a torque transmission shaft of a cylindrical column or hollow cylindrical shape having a function of an output shaft terminal of the wind turbine, which is connected to the outer race side rotor and passes through the inside of the inner race side stationary column in the direction from the free end to the stationary end, wherein the bearings include at least one bearing disposed on the upper side above the wind pressure center position, on which the wind acts on the outer race side rotor, and at least one bearing disposed on the lower side under the wind pressure center position.

In the present invention comprising the outer race side rotor having the plurality of blades for producing the rotational torque with wind, the inner race side stationary column having one free end externally unconstrained and the other stationary end, the plurality of bearings mounted between the outer race side rotor and the inner race side stationary column for supporting the outer race side rotor on the inner race side stationary column, and the torque transmission shaft of a cylindrical column or hollow cylindrical shape having a function of an output shaft terminal of the wind turbine, which is connected to the outer race side rotor and passes through the inside of the inner race side stationary column in the direction from the free end to the stationary end, there are disposed at least one bearing on the upper side above the wind pressure center position, on which the wind in the horizontal direction acts on the outer race side rotor, and at least one bearing on the lower side under the wind pressure center position by way of example. The inner race side stationary column is mounted on a support pedestal having an inner space, a power generator is installed on a foundation in the inner space under the aforementioned support pedestal, the input shaft of the power generator is connected directly or indirectly to a torque transmission shaft extending from the inside of the inner race side stationary column to the inner space in the support pedestal, the top of the torque transmission shaft is connected to the aforementioned rotor of the wind turbine through a flexible joint, and a bearing for the torque transmission shaft for guiding the rotating position while suppressing fluctuation of the torque transmission shaft is disposed on the outer periphery of the aforementioned torque transmission shaft.

This makes it possible to install the power generator just under the outer race side rotor directly on the foundation while being maintained concentrically with the rotary shaft of the outer race side rotor of the wind turbine, whereby the power generator and speed-up device can be placed within the free space just under the rotor, the size and layout of the mechanism can be freely designed, the vibration induced by the rotating rotor can easily be suppressed, and the power generator can be increased in scale, thus to spread a possibility of designing the power generator with a high degree of design freedom. Further, since the bearings are arranged at positions astride the wind pressure center position, e.g. two positions above and under the outer race side rotor, the shaft of the wind turbine needs not to be longly elongated downward, and stable operation of the wind turbine with less load causing vibration of the shaft and less bending moment can easily be maintained.

Further, since the power generator is arranged within the support pedestal placed on the ground, the rotational center of the wind turbine, it is possible to lay out the speed-up device and the power generator uniaxially without interfering in the inner race side stationary column, freely broaden the base of the inner race side stationary column without interference to facilitate designing of the inner race side stationary column having high strength and the base thereof, and give a symmetric design of the whole power generator with simple appearance.

Further, since the torque transmission shaft is connected at its one end to the outer race side rotor through a flexible joint at the position (top end) where the rotation central axis is shared with each other so as to axially penetrate within the inner race side stationary column, absorbency of displacement between the centers of the outer race side rotor and the torque transmission shaft can be increased significantly.

Also, the torque transmission shaft formed in a hollow cylindrical shape makes it possible to reduce the weight of the torque transmission shaft and increase the absorbency of the center displacement

Further, since the bearing for the torque transmission shaft for guiding the rotating position while suppressing fluctuation of the torque transmission shaft is disposed on the outer periphery of the aforementioned torque transmission shaft, the torque transmission shaft can stably rotate within a clearance in the bearings without swinging heavily.

### EFFECT OF THE INVENTION

Since the cantilever type vertical axis wind turbine according to the present invention comprises the outer race side rotor, the inner race side stationary column, and the plurality of bearings for supporting the outer race side rotor so as to arrange these bearings having at least one bearing disposed on the upper side above the wind pressure center position, on which the wind acts on the outer race side rotor, and at least one bearing disposed on the lower side under the wind pressure center position, vertical axis wind turbine itself can be kept low in overall height, and repeated loading imparted on the rotary shaft can be reduced to gain good vibration stability. The load acting on the stationary shaft important for bearing imbalance loads imparted by wind on the rotor becomes an unidirectional load acting in the direction almost opposite to the wind direction, thus to enable the occurrence of vibration to be significantly decreased.

Further, since the shaft on the inner race side serving as the stationary shaft can be set to a thick size having a large section modulus and less flexibility, a structure favorable in strength and vibration stability can be accomplished. Further, since the inner race side stationary column may be formed in a hollow shape, an electric power line connected to the power generator and various control wires can be installed within the inner race side stationary column.

Since a sleeve of the outer race side rotor is supported by at least two bearings at positions astride the wind pressure center position, e.g. two positions above and under the outer race side rotor, the distortion of the shaft becomes remarkably small and the characteristic frequency becomes high, consequently to exclude a possibility of causing large vibration due to shaky revolution of the rotary shaft.

Since the power generator is mounted on the opening end side of the cantilevered inner race side stationary column, the need to use a gear transmission mechanism composed of gears and pinions under the rotary shaft of the wind turbine, which is subject to a source origin of causing lowering of transmission efficiency and generating noises, can be eliminated.

Since the magnetic coupling is disposed for transmitting the rotational torque of the outer race side rotor to the power generator, allowance of the center displacement between the input and output shafts of the coupling can be increased notably in comparison with the other type, so that only the rotational torque can be transmitted almost totally without overloading due to a reactive force caused by transmission gap or the center displacement on the speed-up device or the shaft of the power generator.

Further, the cantilever type vertical axis wind turbine according to the present invention comprises the outer race side rotor, the inner race side stationary column, the plurality of bearings for supporting the outer race side rotor on the inner race side stationary column, and the torque transmission shaft of a cylindrical column or hollow cylindrical shape, wherein at least one bearing is disposed on the upper side above the wind pressure center position, on which the wind in the horizontal direction acts on the outer race side rotor, and at least one bearing is disposed on the lower side under the wind pressure center position by way of example, so as to enable installation of the power generator just under the outer race side rotor directly on the foundation while being maintained concentrically with the rotary shaft of the outer race side rotor of the wind turbine, whereby the power generator and speed-up device can be placed within the free space just under the rotor, the size and layout of the mechanism can be freely designed, the vibration induced by the rotating rotor can easily be suppressed, and the power generator can be increased in scale, thus to spread a possibility of designing the power generator with a high degree of design freedom. Further, since the bearings are arranged at positions astride the wind pressure center position, e.g. two positions above and under the outer race side rotor, the shaft of the wind turbine needs not to be longly elongated downward, and stable operation of the wind turbine with less load causing vibration of the shaft and less bending moment can easily be maintained.

Further, since the power generator is arranged within the support pedestal placed on the ground, the rotational center of the wind turbine, it is possible to lay out the speed-up device and the power generator uniaxially without interfering in the inner race side stationary column, freely broaden the base of the inner race side stationary column without interference to facilitate designing of the inner race side stationary column having high strength and the base thereof, and give a symmetric design of the whole power generator with simple appearance.

Further, since the torque transmission shaft is connected at its one end to the outer race side rotor through a flexible joint at the position (top end) where the rotation central axis is shared with each other so as to axially penetrate within the inner race side stationary column, absorbency of displacement between the centers of the outer race side rotor and the torque transmission shaft can be increased significantly.

Also, the torque transmission shaft formed in a hollow cylindrical shape makes it possible to reduce the weight of the torque transmission shaft and increase the absorbency of the center displacement

Further, since the bearing for the torque transmission shaft for guiding the rotating position while suppressing fluctuation of the torque transmission shaft is disposed on the outer periphery of the aforementioned torque transmission shaft, the torque transmission shaft can stably rotate within a clearance in the bearing without swinging heavily.

### BRIEF DESCRIPTION OF THE DRAWINGS

[FIG. 1] Partially broken perspective view showing the structure of a cantilever type vertical axis wind turbine in a first embodiment
[FIG. 2] Sectional view showing the structure of the cantilever type vertical axis wind turbine 10 in the first embodiment
[FIG. 3] View indicative of the results of provisional calculations of wind pressure acting on the rotary shaft.
[FIG. 4] Sectional view showing the structure of the cantilever type vertical axis wind turbine 10A in a second embodiment.
[FIG. 5] View showing another example of connection using a flexible joint

### EXPLANATION OF REFERENCE MARKS

- 8: Pole
- 10, 10A: Cantilever type vertical axis wind turbine
- 12: Mount portion
- 14, 32: Inner race side stationary column
- 16: Power generator
- 17: Inner race side rotor
- 18: Blade
- 20: Support arm
- 22, 31: Outer race sleeve
- 24: Torque transmission cap
- 26: Speed-up device
- 28: Coupling
- 30a, 30b, 30c: Bearings
- 33: Flexible joint
- 34: Torque transmission shaft
- 35: Support pedestal
- 36: Dust seal
- 37: Bearing for torque transmission shaft
- 70: Rotary shaft

### BEST MODE FOR CARRYING OUT THE INVENTION

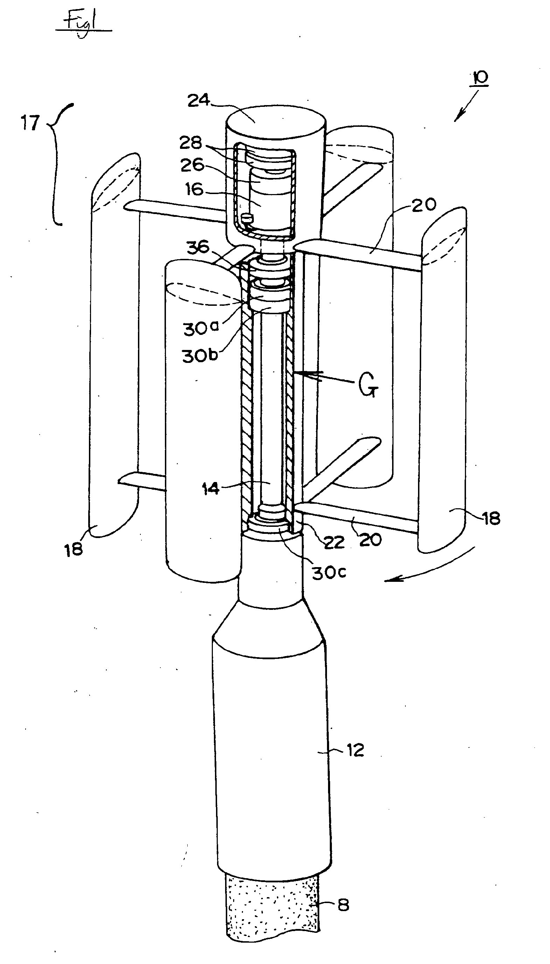

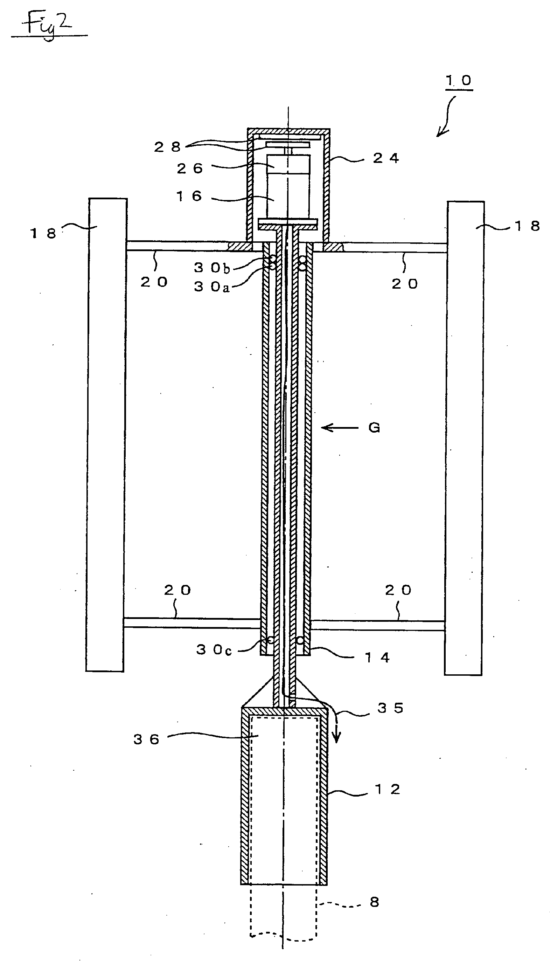

The cantilever type vertical axis wind turbine in the first embodiment of the present invention will be described hereinafter. FIG 1 is a partially broken perspective view showing the structure of a cantilever type vertical axis wind turbine 10. FIG 2 is a sectional view showing the structure of the cantilever type vertical axis wind turbine 10.

As illustrated in FIG 1 and FIG 2, the cantilever type vertical axis wind turbine 10 comprises a mount portion 12 attached to an electric pole or other pole 8, a cantilevered inner race side stationary column 14 fixed onto the mount portion 12 for supporting an outer race side rotor 17 of the vertical axis wind turbine through bearings 30a,30b and 30c having their lower ends secured onto the mount portion 12, a power generator 16 disposed on the opening end side of the inner race side stationary column 14, and the outer race side rotor 17 for generating a rotational torque with wind.

The outer race side rotor 17 includes blades 18 for generating the rotational torque by converting the wind velocity to a lifting power, support arms 20 each having a streamlined section for supporting the blades 18 at their upper and lower portions, an outer race sleeve 22 for mounting the support arms 20, and a torque transmission cap 24 for transmitting the rotational torque of the outer race sleeve 22 to the power generator 16.
The mark "G" in the drawings denotes a mean position of the force exerted when the outer race side rotor 17 receives the wind (referred to as a center of air pressure).

According to the structure, since the inner race stationary column 14 does not rotate, the inner race side stationary column 14 can easily be designed so as to be a thick size having a large section modulus and less flexibility without concern for inertia moment or the like. Thus, since the inner race side stationary column 14 can be formed in a hollow shape (cf. FIG 2), an electric power line connected to the power generator and various control wires can be installed within the inner race side stationary column 14.

Since the outer race sleeve 22 of the outer race side rotor 17 is supported by two bearings (for example, bearings 30a, 30b and 30c) at positions astride the wind pressure center position so as to support the force in the radial direction, the distortion of the shaft becomes remarkably small and the characteristic frequency becomes high, consequently to exclude a possibility of causing large vibration due to shaky revolution of the rotary shaft.

In the embodiment shown in FIG 1 and FIG 2, a speed-up device 26 is attached to the input shaft of the generator 16 and regulated so as to increase the voltage of electricity generated with the revolution of the outer race side rotor 17. Between the transmission cap 24 and the speed-up device 26, there is disposed a flexible coupling 28 having a function of transmitting the rotational torque of the outer race side rotor 17 to the power generator 16 through the speed-up device 26 and for absorbing displacement, inclination and fluctuation in distance between the both shafts. The coupling 28 may be made of elastic body such as rubber and spring, or it may be of a contact coupling such as of an Oldham's coupling type and a lathe-dog type, or a non-contact coupling such as a magnetic coupling using magnetic force.

There have conventionally been many vertical axis wind turbines having the power generator placed under the wind turbine rotor for transmitting the rotational torque of the wind turbine rotor through a gear transmission mechanism. In the structure having the rotor placed on the outer race side as in the present invention, the cantilevered inner race side stationary column 14 can penetrate to the top of the outer race side rotor 17, so that the power generator 16 and the unit-type speed-up device 26 can be designed to be reasonably mounted on the leading end (top end) of the inner race side stationary column. The transmission cap 24 for transmitting the rotational torque can possess a cover function of covering the power generator 16, speed-up device 26 and coupling 28 in conjunction with its own transmission function.

The installation of the power generator under the bearing makes it necessary to mount a gear on the outer race side rotor and a pinion gear on the side of the power generator and further mount a cover member for covering the transmission mechanism and a waterproof structure. The gear transmission mechanism including the aforementioned gear and pinion has high possibilities of leading to decrease of transmission efficiency and generating noises.

Specifically, the magnetic coupling can transmit the rotational movement to the side of the speed-up device 26 by using the magnetic force with keeping a clearance without bringing a disc for coupling into direct contact with the coupling mechanism body. Therefore, allowance of the center displacement between the both input and output shafts of the coupling is large, so that only the rotational torque can be transmitted almost totally without overloading due to a reactive force caused by transmission gap or the center displacement on the speed-up device or the shaft of the power generator. The other force and moment than the torque generated by the outer race side rotor 17 are all supported by the bearings 30a, 30b and 30c.

Between the inner race side stationary column 14 and the outer race sleeve 22, there are disposed the bearings 30a, 30b and 30c so that the outer race sleeve 22 is rotatably supported by the inner race side stationary column 14. The outer race sleeve 22 rotates around the circumference of the inner race side stationary column 14 while receiving all the entire weight of the outer race side rotor 17 and the dynamic force and moment.

In the embodiment illustrated in FIG. 1 and FIG. 2, angular bearings capable of supporting both the radial load and the thrust load of the bearings 30a and 30b are used in their back-to-back state, but the present invention does not impose any limitation to this combined bearings, and alternatively, conical bearings may be used, or the radial bearing and thrust bearing may be mounted independently. In the embodiment shown in FIG. 2, a ball bearing capable of supporting the radial load is used as the bearing 30c, but the invention is not limited to the ball bearing. In the embodiment shown in FIG 1, a dust seal 36 is disposed above the bearing 30a to keep the bearing 30a free from dusts and water.

As shown in FIG 1 and FIG 2, the present invention has the bearings 30a, 30b and 30c of the outer race side rotor 17 having the function of the radial bearing, which are placed at the position astride the wind pressure center position G on which the wind pressure acts on the outer race side rotor 17 (rotating body) of the vertical axis wind turbine 10. By employing this structure, deflection of the outer race side rotor 17 caused by the wind pressure and shaky revolution due to the deflection can be reduced largely, consequently to fulfill a stable supporting system for the outer race side rotor 17. Therefore, it is possible to remarkably reduce the vibration of the outer race side rotor 17 and the occurrence of resonance and noises on the entire rotating mechanism.

The distance between the aforementioned bearings 30a and 30b and the bearing 30c may preferably be determined so as to keep the bearings well away from each other not less than at least five times the inner diameter of the bearing. By disposing the radial bearing at the wind pressure center position G, on which the wind acts on the outer race side rotor 17 (rotating body) of the vertical axis wind turbine 10, the same action and function can be obtained.

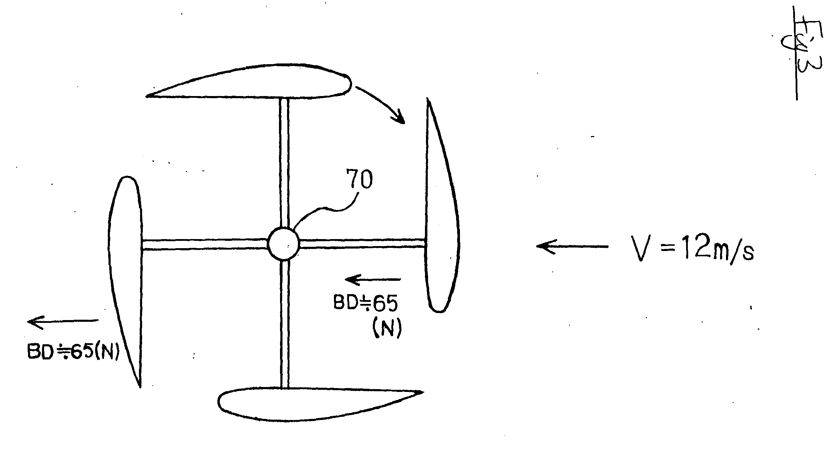

FIG. 3 shows a view indicative of the results of provisional calculations of wind pressure acting on the rotary shaft. For example, where the rotating blades of a dual blade wind turbine having a blade chord of 0.2 m in length and a span of the blades of 1.8 m is hit with winds of velocity (V=12m/s) in one direction (when the resistance coefficient of the blades in the blade surface direction is CD ≒ 2), each blade receives a drag of about 65N one time while making one revolution, and the force in the opposite direction undergoes a drag of -65N when further turning by 180 degrees. Simply stated, the second blade also receives the same drag, thus turning out that the two blades undergo a load of about 130 N in total in one side direction. When the wind turbine rotates one time, large fluctuating loads of +130N and -130N act repeatedly on the rotary shaft of an axial rotation type wind turbine, thereby causing shaky revolution of the rotary shaft 70 due to the change in load.

Thus, this embodiment comprises the plurality of blades 18, the outer race side rotor 17 generating the rotational torque with wind, the inner race side stationary column 14 having the upper free end and the lower fixed end, and the bearings 30a, 30b and 30c between the outer race side rotor 17 and the inner race side stationary column 14. The bearings 30a, 30b and 30c are placed at the upper and lower end portions of the outer race sleeve 22. Further, the power generator is mounted on the top of the inner race side stationary column, and the magnetic coupling 28 for transmitting the rotational torque of the outer race side rotor 17 to the power generator 16 is placed between the outer race side rotor 17 and the power generator 16.

Thus, the vertical axis wind turbine itself can be kept low in overall height, and repeated loading imparted on the rotary shaft can be reduced to gain good vibration stability. The load acting on the stationary shaft important for bearing imbalance loads imparted by wind on the rotor becomes an unidirectional load acting in the direction almost opposite to the wind direction, thus to enable the occurrence of vibration to be significantly decreased.

Further, since the inner race side stationary column 14 can be set to a thick size having a large section modulus and less flexibility, a structure favorable in strength and vibration stability can be accomplished. Further, since the inner race side stationary column 14 may be formed in a hollow shape, an electric power line connected to the power generator 16 and various control wires can be installed within the inner race side stationary column 14.

Since the sleeve 22 of the outer race side rotor 17 is supported by at least two bearings at positions astride the wind pressure center position, a possibility of causing large vibration due to shaky revolution of the rotary shaft can be diminished.

By using the magnetic coupling 28, allowance of the center displacement between the input and output shafts of the coupling can be increased notably in comparison with the other type, so that only the rotational torque can be transmitted almost totally without overloading due to a reactive force caused by transmission gap or the center displacement on the speed-up device 26 or the shaft of the power generator 16r.

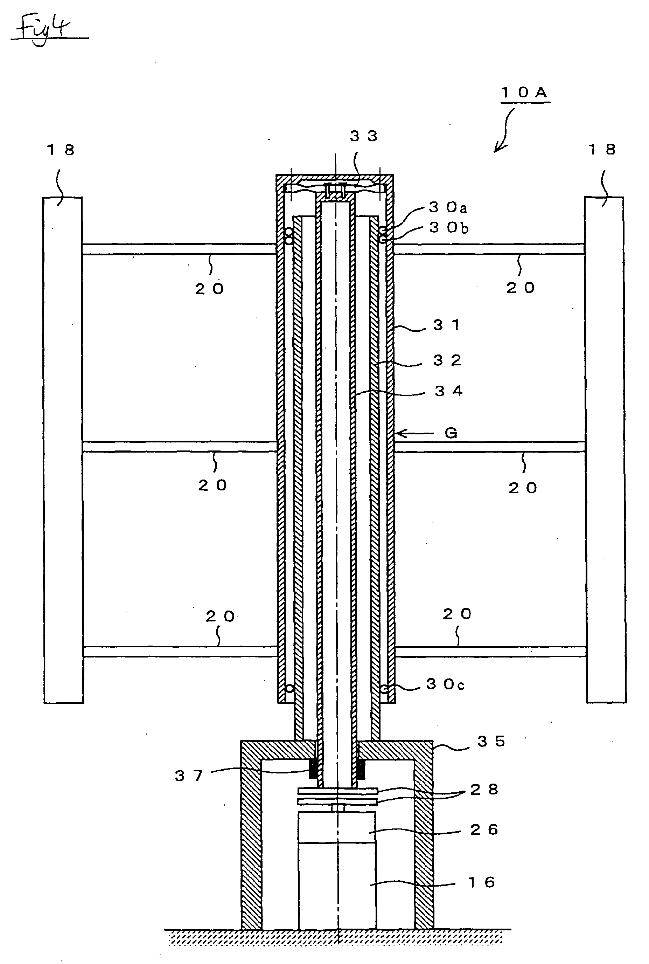

The cantilever type vertical axis wind turbine in the second embodiment of the present invention will be described hereinafter. FIG 4 is a sectional view showing the structure of the cantilever type vertical axis wind turbine 10A in a second embodiment.

As shown in FIG. 4, the cantilever type vertical axis wind turbine 10A comprises blades 18, an outer race side rotor 17 having support arms 20 and an outer race sleeve 31, a cantilevered inner race side stationary column 32 for supporting the outer race side rotor 17, bearings 30a,30b and 30c between the outer race side rotor 17 and the inner race side stationary column 32, a torque transmission shaft 34, a support pedestal 35, a power generator 16, a speed-up device 26, a coupling 28, and a bearing 36 for the torque transmission shaft.

Each blade 18 is attached to the outer race sleeve 31 through the support arms 30. In this embodiment, the support arms 20 are at three upper, middle and lower positions. The outer race sleeve 31 is supported by the inner race side stationary column 32 through the bearings 30a, 30b and 30c. The bearings 30a, 30b and 30c are arranged at positions astride the wind pressure center position G, that is, the bearings 30a and 30b are placed at the upper portion of the outer race sleeve 31, and the bearing 30c is placed at the lower portion of the outer race sleeve 31.

The inner race side stationary column 32 is formed in a hollow cylindrical shape and has the upper free end and the lower fixed end. The inner race side stationary column 32 has the lower end secured on the support pedestal 35.

The torque transmission shaft 34 is formed in a hollow cylindrical shape and connected at its upper end to the outer race sleeve 31 through a flexible joint 33. This torque transmission shaft 34 penetrates the inner race side stationary column from its free end in the direction of the fixed end and is inserted into the support pedestal 35, so that the shaft end portion of the lower end has a function of the output shaft end of the wind turbine. The lower end of the torque transmission shaft 34 is guided by the bearing 36 for the torque transmission shaft.

The speed-up device 26 and the power generator 16 are mounted on the foundation inside the support pedestal 35. The rotational torque generated by the outer race side rotor 17 is transmitted to the power generator 16 through the torque transmission shaft 34.

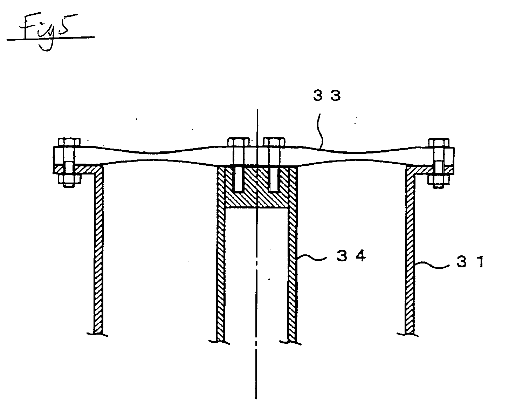

FIG 5 is a view showing another example of connection using a flexible joint 33. As shown in FIG. 5, the top of the torque transmission shaft 34 is fixed at the middle portion of the flexible joint 33 with screws for connecting the torque transmission shaft 34 with the outer race sleeve 31. The top of the outer race sleeve 31 has a flange fixed onto the outer peripheral portion of the flexible joint 33.

Thus, this embodiment comprises the outer race side rotor 17 generating the rotational torque with wind, the inner race side stationary column 32 having the upper free end and the lower fixed end, the bearings 30a, 30b and 30c between the outer race side rotor 17 and the inner race side stationary column 32, and the torque transmission shaft 34 of a hollow cylindrical shape having the lower end serving as an output shaft terminal, wherein the upper end of the torque transmission shaft 34 is connected to the outer race sleeve 31 through the flexible joint 33, and the lower end thereof is guided by the bearing 36 for the torque transmission shaft.

According to this, it becomes possible to install the power generator 16 just under the outer race side rotor 17 directly on the foundation while being maintained concentrically with the rotary shaft of the outer race side rotor 17 of the wind turbine, whereby the power generator 16 and the speed-up device 26 can be placed within the free space just under the rotor, the size and layout of the power generator 16 can be freely designed, the vibration induced by the rotating rotor can easily be suppressed, and the power generator can be increased in scale, thus to spread a possibility of designing the power generator with a high degree of design freedom. Further, since the bearings are arranged at positions astride the wind pressure center position, e.g. two positions above and under the outer race side rotor, the shaft of the wind turbine needs not to be longly elongated downward, and stable operation of the wind turbine with less load causing vibration of the shaft and less bending moment can easily be maintained.

Further, since the power generator 16 is arranged within the support pedestal 35 placed on the ground, the rotational center of the wind turbine, it is possible to lay out the speed-up device 26 and the power generator 16 uniaxially without interfering in the inner race side stationary column 32, freely broaden the base of the inner race side stationary column 32 without interference of the speed-up device 26 and the power generator 16 to facilitate designing of the inner race side stationary column 32 having high strength and the base thereof, and give a symmetric design of the whole power generator with simple appearance.

Further, since the torque transmission shaft 34 is connected at its one end to the outer race side rotor 17 through the flexible joint 33 at the position where the rotation central axis is shared with each other so as to axially penetrate within the inner race side stationary column 32, absorbency of displacement between the centers of the outer race side rotor 17 and the torque transmission shaft 34 can be increased significantly.

Also, the torque transmission shaft 34 formed in a hollow cylindrical shape makes it possible to reduce the weight of the torque transmission shaft 34 and increase the absorbency of the center displacement

Further, since the bearing 36 for the torque transmission shaft 34 for guiding the rotating position while suppressing fluctuation of the torque transmission shaft 34 is disposed on the outer periphery of the torque transmission shaft 34, the torque transmission shaft 34 can stably rotate within a clearance in the bearings 30a, 30b and 30c without swinging heavily.

Although the two bearings 30a and 30b are disposed on the upper portion between the inner race side stationary column 14 and the outer race sleeve 22 (or between the inner race side stationary column and the outer race sleeve 31) in the aforementioned embodiments, the invention is not to be limited to this structure. For example, only the bearing 30a may be disposed on the upper portion.

Although the aforementioned embodiment in which the bearings 30a, 30b and 30c are disposed at the two upper and lower positions of the outer race side rotor is described above, the invention is not to be limited to the structure of this embodiment The bearings may be arranged at the other positions astride the wind pressure center position.

Although the structure using the bearings 30a, 30b and 30c as the radial bearings placed at the two upper and lower positions is described above, the invention is not to be limited to the structure of the aforementioned embodiment. For example, a radial bearing may be placed on the upper portion and a thrust bearing may be placed on the lower portion in the cantilever type vertical axis wind turbine 10 of the first embodiment. In the cantilever type vertical axis wind turbine 10A of the second embodiment, the thrust bearing may be placed on the upper portion and the radial bearing may be placed on the lower portion.

Although the torque transmission shaft 34 formed in a hollow cylindrical shape is described in the aforementioned embodiment, the invention is not to be limited to the structure of the aforementioned embodiment. The torque transmission shaft 34 may be formed in a column shape.

Although the lower end is a fixed end in the cantilever type vertical axis wind turbine 10 of the aforementioned first embodiment, the invention is not to be limited to the structure of the aforementioned embodiment

Although the shape of the blade in the embodiments shown in FIG 1, FIG. 2 and FIG. 4 is formed like a straight wing, the blade may be formed in a curved shape on the condition that the wind turbine is of a cantilever type having no support cable on the upper portion of the wind turbine.

### INDUSTRIAL APPLICABILITY

The cantilever type vertical axis wind turbine of the present invention can prevent problems of vibrations caused by the entire rotating mechanism and fulfill high operation stability, reliability and durability, while putting forth a high output performance of the lift type wind turbine, and adapt to an excellent design with a high degree of design freedom important for an urban type wind turbine. Thus, the present invention is a very suitable technology for the urban type wind turbine installed near the living area of people.

## Claims

1. A cantilever type vertical axis wind turbine featured by comprising
an outer race side rotor having a plurality of blades for producing a rotational torque with wind,
an inner race side stationary column having one free end externally unconstrained and the other stationary end, and
a plurality of bearings mounted between said outer race side rotor and said inner race side stationary column for supporting said outer race side rotor on the inner race side stationary column.

2. A cantilever type vertical axis wind turbine featured by comprising
an outer race side rotor having a plurality of blades for producing a rotational torque with wind,
an inner race side stationary column having one free end externally unconstrained and the other stationary end, and
a plurality of bearings mounted between said outer race side rotor and said inner race side stationary column for supporting said outer race side rotor on the inner race side stationary column,
wherein said bearings include at least one bearing disposed on the upper side above said wind pressure center position, on which the wind acts on the outer race side rotor, and at least one bearing disposed on the lower side under the wind pressure center position.

3. The cantilever type vertical axis wind turbine set forth in claim 1 or claim 2, featured in that a power generator is disposed on the free end side of said inner race side stationary column.

4. The cantilever type vertical axis wind turbine set forth in claim 3, featured in that a magnetic coupling for a rotatinal torque of said outer race side rotor to said power generator is disposed between said outer race side rotor and said power generator.

5. A cantilever type vertical axis wind turbine featured by comprising
an outer race side rotor having a plurality of blades for producing a rotational torque with wind,
an inner race side stationary column having one free end externally unconstrained and the other stationary end,
a plurality of bearings mounted between said outer race side rotor and said inner race side stationary column for supporting said outer race side rotor on said inner race side stationary column, and
a torque transmission shaft of a cylindrical column or hollow cylindrical shape having a function of an output shaft terminal of the wind turbine, which is connected to said outer race side rotor and passes through the inside of said inner race side stationary column in the direction from the free end to the stationary end.

6. The cantilever type vertical axis wind turbine set forth in claim 5, featured in that said inner race side stationary column is mounted on a support pedestal having an inner space, the power generator is installed on a foundation in the inner space under said support pedestal, and the input shaft of the power generator is connected directly or indirectly to a torque transmission shaft extending from the inside of said inner race side stationary column to the inner space in the support pedestal.

7. The cantilever type vertical axis wind turbine set forth in claim 5, featured in that the top of said torque transmission shaft is connected to said rotor of the wind turbine through a flexible joint.

8. The cantilever type vertical axis wind turbine set forth in claim 5, featured in that a bearing for the torque transmission shaft for guiding the rotating position while suppressing fluctuation of said torque transmission shaft is disposed on the outer periphery of said torque transmission shaft.

9. A cantilever type vertical axis wind turbine featured by comprising
an outer race side rotor having a plurality of blades for producing a rotational torque with wind,
an inner race side stationary column having one free end externally unconstrained and the other stationary end,
a plurality of bearings mounted between said outer race side rotor and said inner race side stationary column for supporting said outer race side rotor on the inner race side stationary column, and
a torque transmission shaft of a cylindrical column or hollow cylindrical shape having a function of an output shaft terminal of the wind turbine, which is connected to said outer race side rotor and passes through the inside of said inner race side stationary column in the direction from the free end to the stationary end,
wherein said bearings include at least one bearing disposed on the upper side above the wind pressure center position, on which the wind acts on said outer race side rotor, and at least one bearing disposed on the lower side under said wind pressure center position.

10. The cantilever type vertical axis wind turbine set forth in claim 9, featured in that said inner race side stationary column is mounted on a support pedestal having an inner space, the power generator is installed on a foundation in the inner space under said support pedestal, and the input shaft of the power generator is connected directly or indirectly to a torque transmission shaft extending from the inside of said inner race side stationary column to the inner space in the support pedestal.

## Amended claims

### Amended claims under Art. 19.1 PCT

1. Amended). A cantilever type vertical axis wind turbine featured by comprising
an outer race side rotor having a plurality of blades for producing a rotational torque with wind,
an inner race side stationary column having one free end externally unconstrained and the other stationary end, and
a plurality of bearings mounted between said outer race side rotor and said inner race side stationary column for supporting said outer race side rotor on the inner race side stationary column,
wherein the position of said outer race side rotor, which is face to or adjacent to said free end of the stationary column, is the output end for said rotational torque.

2. Amended). A cantilever type vertical axis wind turbine featured by comprising
an outer race side rotor having a plurality of blades for producing a rotational torque with wind,
an inner race side stationary column having one free end externally unconstrained and the other stationary end, and
a plurality of bearings mounted between said outer race side rotor and said inner race side stationary column for supporting said outer race side rotor on the inner race side stationary column,
wherein the position of said outer race side rotor, which is face to or adjacent to said free end of the stationary column, is the output end for said rotational torque, and
wherein said bearings include at least one bearing disposed on the upper side above said wind pressure center position, on which the wind acts on the outer race side rotor, and at least one bearing disposed on the lower side under the wind pressure center position.

3. Amended). The cantilever type vertical axis wind turbine set forth in claim 1 or claim 2, featured in that a power generator is disposed on the free end side of said inner race side stationary column and has a rotational main shaft connected to the output end of said outer race side rotor directly or through a speed-up device or the like.

4. The cantilever type vertical axis wind turbine set forth in claim 3, featured in that a magnetic coupling for a rotational torque of said outer race side rotor to said power generator is disposed between said outer race side rotor and said power generator.

5. (Amended). A cantilever type vertical axis wind turbine featured by comprising
an outer race side rotor having a plurality of blades for producing a rotational torque with wind,
an inner race side stationary column having one free end externally unconstrained and the other stationary end,
a plurality of bearings mounted between said outer race side rotor and said inner race side stationary column for supporting said outer race side rotor on said inner race side stationary column, and
a torque transmission shaft of a cylindrical column or hollow cylindrical shape having a function of an output shaft terminal of the wind turbine and passes through the inside of said inner race side stationary column in the direction from the free end to the stationary end, wherein the position of said outer race side rotor, which is face to or adjacent to said free end of the stationary column, is the output end for said rotational torque, and said torque transmission shaft is connected to the output end.

6. The cantilever type vertical axis wind turbine set forth in claim 5, featured in that said inner race side stationary column is mounted on a support pedestal having an inner space, the power generator is installed on a foundation in the inner space under said support pedestal, and the input shaft of the power generator is connected directly or indirectly to a torque transmission shaft extending from the inside of said inner race side stationary column to the inner space in the support pedestal.

7. (Amended). The cantilever type vertical axis wind turbine set forth in claim 5, featured in that the top of said torque transmission shaft is connected to said output end of said rotor of the wind turbine through a flexible joint.

8. The cantilever type vertical axis wind turbine set forth in claim 5, featured in that a bearing for the torque transmission shaft for guiding the rotating position while suppressing fluctuation of said torque transmission shaft is disposed on the outer periphery of said torque transmission shaft.

9. A cantilever type vertical axis wind turbine featured by comprising
an outer race side rotor having a plurality of blades for producing a rotational torque with wind,
an inner race side stationary column having one fire end externally unconstrained and the other stationary end,
a plurality of bearings mounted between said outer race side rotor and said inner race side stationary column for supporting said outer race side rotor on the inner race side stationary column, and
a torque transmission shaft of a cylindrical column or hollow cylindrical shape having a function of an output shaft terminal of the wind turbine and passes through the inside of said inner race side stationary column in the direction from the free end to the stationary end, wherein the position of said outer race side rotor, which is face to or adjacent to said free end of the stationary column, is the output end for said rotational torque, and said torque transmission shaft is connected to the output end, and
wherein said bearings include at least one bearing disposed on the upper side above the wind pressure center position, on which the wind acts on said outer race side rotor, and at least one bearing disposed on the lower side under said wind pressure center position.

10. The cantilever type vertical axis wind turbine set forth in claim 9, featured in that said inner race side stationary column is mounted on a support pedestal having an inner space, the power generator is installed on a foundation in the inner space under said support pedestal, and the input shaft of the power generator is connected directly or indirectly to a torque transmission shaft extending from the inside of said inner race side stationary column to the inner space in the support pedestal.

Statement under Art. 19.1 PCT
Claim 1 is amended to include the limitation "wherein the position of said outer race side rotor, which is face to or adjacent to said free end of the stationary column, is the output end for said rotational torque". This amendment to the claim is based on the descriptions of Paragraphs [0046] on Page 6 and [0049] on Page 11 of the specification on file and FIG 2.

Claim 2 is amended to include the limitation "wherein the position of said outer race side rotor, which is face to or adjacent to said free end of the stationary column, is the output end for said rotational torque". This amendment to the claim is based on the descriptions of Paragraphs [0046] on Page 10 and [0049] on Page 11 of the specification on file and FIG 2.

Claim 3 is amended to include the limitation "a power generator is disposed on the free end side of said inner race side stationary column". This amendment to the claim is based on the descriptions of Paragraphs [0046] on Page 10 and [0049] on Page 11 of the specification on file and FIG 2.

Claim 3 is amended from "a torque transmission shaft of a cylindrical column or hollow cylindrical shape having a function of an output shaft terminal of the wind turbine, which is connected to said outer race side rotor and passes through the inside of said inner race side stationary column in the direction from the free end to the stationary end" to "a torque transmission shaft of a cylindrical column or hollow cylindrical shape having a function of an output shaft terminal of the wind turbine and passes through the inside of said inner race side stationary column in the direction from the free end to the stationary end, wherein the position of said outer race side rotor, which is face to or adjacent to said free end of the stationary column, is the output end for said rotational torque, and said torque transmission shaft is connected to the output end." This amendment to the claim is based on the descriptions of Paragraphs [0067] on Page 13 of the specification on file and FIG. 4.

Claim 7 is amended from "the top of said torque transmission shaft is connected to said rotor of the wind turbine through a flexible joint" to "the top of said torque transmission shaft is connected to said output end of said rotor of the wind turbine through a flexible joint." This amendment to the claim is based on the descriptions of Paragraphs [0067] on Page 13 of the specification on file and FIGS. 4 and 5.

Claim 9 is amended from "a torque transmission shaft of a cylindrical column or hollow cylindrical shape having a function of an output shaft terminal of the wind turbine, which is connected to said outer race side rotor and passes through the inside of said inner race side stationary column in the direction from the free end to the stationary end" to "a torque transmission shaft of a cylindrical column or hollow cylindrical shape having a function of an output shaft terminal of the wind turbine and passes through the inside of said inner race side stationary column in the direction from the free end to the stationary end, wherein the position of said outer race side rotor, which is face to or adjacent to said free end of the stationary column, is the output end for said rotational torque, and said torque transmission shaft is connected to the output end." This amendment to the claim is based on the descriptions of Paragraphs [0067] on Page 13 of the specification on file and FIG 4.

Claims 4, 6, 8 and 10 remain unchanged.

The cited References 1 and 2 disclose wind turbines comprising an outer race side rotor for producing a rotational torque with wind, and an inner race side stationary column having one free end externally unconstrained and the other stationary end. However, the present invention is featured in that "the position of the outer race side rotor, which is face to or adjacent to the free end of the stationary column, is the output end for the rotational torque" and "the power generator installed at the free end of said inner race side stationary column." These features of the invention is not mentioned in the cited references at all

The cited Reference 3 teaches a structure having a torque transmission shaft connected to the outer race side rotor and passing through inside the inner race side stationary column, but makes no mention of "the lower end portion of the shaft (torque transmission shaft) has a function of an output shaft terminal of the wind turbine."

Therefore, it is believed that the invention mentioned in all the claims is novel and involve an inventive step over all of the cited references.
